(19) Europäisches Patentamt

European Patent Office

Office européen des brevets

(11) **EP 1 148 658 B1**

(12) **FASCICULE DE BREVET EUROPEEN**

(45) Date de publication et mention
de la délivrance du brevet:
**15.11.2006 Bulletin 2006/46**

(51) Int Cl.:
***H04B 7/005*** (2006.01)

(21) Numéro de dépôt: **01400995.5**

(22) Date de dépôt: **18.04.2001**

(54) **Méthode de contrôle de puissance dans un système de télécommunication**

Verfahren zur Sendeleistungsregelung in einem Telekommunikationssystem

Power control method in a telecommunication system

(84) Etats contractants désignés:
**AT BE CH CY DE DK ES FI FR GB GR IE IT LI LU MC NL PT SE TR**

(30) Priorité: **19.04.2000 FR 0005217**

(43) Date de publication de la demande:
**24.10.2001 Bulletin 2001/43**

(73) Titulaire: **Mitsubishi Electric Information Technology Centre Europe B.V.**
**1119 NS Schiphol Rijk (NL)**

(72) Inventeur: **Voyer, Nicolas**
**35700 Rennes (FR)**

(74) Mandataire: **Maillet, Alain**
**SCP Le Guen & Maillet,**
**5, Place Newquay,**
**B.P. 70250**
**35802 Dinard Cedex (FR)**

(56) Documents cités:
**WO-A-93/07702**

- **KIM D: "DOWNLINK POWER ALLOCATION AND ADJUSTMENT FOR CDMA CELLULAR SYSTEMS" IEEE COMMUNICATIONS LETTERS, US,IEEE SERVICE CENTER, PISCATAWAY,US, vol. 1, no. 4, 1 juillet 1997 (1997-07-01), pages 96-98, XP000695213 ISSN: 1089-7798**
- **DONG DO LEE ET AL: "OTHER-CELL INTERFERENCE WITH POWER CONTROL IN MACRO/MICROCELL CDMA NETWORKS" IEEE VEHICULAR TECHNOLOGY CONFERENCE,US, NEW YORK, IEEE, vol. CONF. 46, 28 avril 1996 (1996-04-28), pages 1120-1124, XP000593133 ISBN: 0-7803-3158-3**
- **LU Y ET AL: "PERFORMANCE EVALUATION OF UNIFYING POWER CONTROL, ERROR CORRECTION CODING AND SCHEDULING FOR A DS CDMA DOWNLINK SYSTEM" IEEE PACIFIC RIM CONFERENCE ON COMMUNICATIONS, COMPUTERS AND SIGNAL PROCESSING,US, NEW YORK, NY: IEEE, 20 août 1997 (1997-08-20), pages 501-505, XP000852218 ISBN: 0-7803-3906-1**

**Description**

La présente invention concerne une méthode de contrôle de puissance dans un système de télécommunication comprenant une pluralité d'émetteurs Ei et une pluralité de récepteurs Rj, un canal de transmission Lij entre un émetteur Ei et un récepteur Rj pouvant être perturbé par une transmission sur un canal Lkl (k,l)≠(i,j).

La présente invention concerne plus particulièrement une méthode de contrôle de puissance de signaux montants ou de signaux descendants dans un système de télécommunication cellulaire à accès multiple par répartition de code.

Dans un système de télécommunication radiomobile de type à accès multiple par répartition de code (CDMA), les puissances de transmission de chacun des signaux émis (par les stations de base ou bien par les mobiles) doivent être ajustées afin que le niveau de rapport signal à bruit plus interférence atteigne exactement le niveau requis, fonction du débit de la liaison et de la qualité du signal souhaitée.

Pour un récepteur donné, le rapport signal à bruit plus interférence est défini comme étant égal au rapport entre le niveau de signal reçu avec le niveau de bruit de fond plus le niveau d'interférence totale reçue. Le niveau d'interférence reçue est alors égale à la somme des puissances reçues de chacun des émetteurs interférents.

Entre chaque émetteur et chaque récepteur, le canal de transmission atténue le signal transmis, si bien que le signal reçu a une puissance de réception égale à la puissance de transmission diminuée d'une atténuation propre au canal de transmission entre le transmetteur et le récepteur.

Dans le cas d'une liaison montante (up-link, reverse channel), c'est à dire dans le cas où une station mobile Mi transmet un signal à la station de base Bf(i) qui la sert, le rapport signal à bruit plus interférence peut s'écrire :

$$SNR_i = \frac{PtM_i * G_{i,f(i)}}{No + (1-\eta) \sum_{\substack{j \neq i \\ f(j)=f(i)}} PtM_j * G_{j,f(i)} + \sum_{\substack{j \\ f(j) \neq f(i)}} PtM_j * G_{j,f(i)}} \quad (1)$$

où PtMi est la puissance de transmission du signal transmis par le mobile Mi ;

$\eta$ est le facteur de réduction d'interférence intracellulaire ;

Gi,k est le coefficient d'atténuation du canal de transmission entre le mobile Mi et la station de base Bk ;

f(i) est l'indice de la station de base servant le mobile Mi ;

N0 est le niveau de puissance du bruit de fond.

Le second terme figurant au dénominateur de l'équation (1) représente l'interférence intra-cellulaire, interférence générée par les mobiles Mj servis par la même station de base Bf(i). Le troisième terme figurant au dénominateur représente l'interférence extra-cellulaire, interférence générée par les mobiles Mj situés hors de la cellule Cf(j) servie par la station de base Bf(j).

Dans le cas d'une liaison descendante (down-link, forward channel), c'est à dire dans le cas où un mobile Mi reçoit un signal de la station de base Bf(i) qui le sert, le rapport signal sur bruit plus interférence peut s'écrire :

$$SNR_i = \frac{PtB_{f(i),i} * G_{i,f(i)}}{No + \alpha \left( PtB_{f(i)} - PtB_{f(i),i} \right) G_{i,f(i)} + \sum_{k \neq f(i)} PtB_k * G_{i,k}} \quad (2)$$

$$PtB_k = PtcB_k + \sum_{\forall i / f(i)=k} PtB_{f(i),i}$$

où PtBf(i),i est la puissance de transmission du signal transmis de la station de base Bf(i) au mobile Mi ;

PtcBk est la puissance des signaux communs transmis par la station de base Bk ;

PtBk est le niveau de puissance totale ou composite transmis par la station de base Bk à tous les mobiles servis par elle ;

Gi,k est le coefficient d'atténuation du canal de transmission entre la station de base Bk et le mobile Mi.

Le second terme figurant au dénominateur de l'équation (2) représente l'interférence intra-cellulaire, interférence due aux signaux transmis par la station de base Bf(i) aux mobiles qu'elle sert. Le troisième terme figurant au dénominateur de l'équation (2) représente l'interférence extra-cellulaire, interférence due aux signaux transmis par les stations de base autres que Bf(i).

Le contrôle de puissance évoqué plus haut vise à rechercher les niveaux de puissance PtMi (dans le cas de liaison montante) et PtBf(i),i (dans le cas de liaison descendante) permettant d'atteindre les rapports signal sur bruit plus interférence requis pour les différentes liaisons entre mobiles et stations de base.

Il est connu, par exemple de l'article intitulé « Downlink power allocation and adjustments for CDMA cellular systems» de Dongwoo Kim publié dans IEEE Communications Letters, Vol. 1 ,n° 4, Juillet 97, de prévoir que chaque mobile mesure le niveau d'interférence qu'il reçoit et transmette cette information à la station de base qui le sert. Les différentes stations de base indiquent alors aux différents mobiles quels sont les niveaux de puissance de transmission qu'ils doivent respectivement utiliser afin d'atteindre le rapport signal sur bruit désiré. Ce type d'algorithme assure une convergence des niveaux de puissance de transmission sans qu'aucune entité n'ait à connaître tous les paramètres du système. Cependant, l'inconvénient majeur de ce type d'algorithme réside dans la nécessité, pour assurer sa convergence, de rafraîchir très fréquemment les valeurs de puissances de tous les émetteurs. Si tous les calculs doivent se faire dans une seule unité de calcul, cela suppose une masse conséquente de calculs à effectuer, qui rend en pratique la simulation précise de ce type de phénomènes inaccessible aux unités de calculs existantes.

En outre, cette complexité de calcul ne permet pas de suivre le comportement dynamique du système, lorsque des caractéristiques d'un canal de transmission sont modifiées au cours du temps.

Une approche alternative serait d'exprimer le problème de façon matricielle, en ayant une connaissance a priori de tous les paramètres du système. On peut alors en effet exprimer le problème sous la forme A x P = B où P serait le vecteur des niveaux de puissance d'émission. Pour résoudre le problème il suffit donc de trouver la matrice $A^{-1}$ inverse de A telle que $A^{-1}A = I$, la matrice identité. Alors, on peut obtenir le vecteur des puissances P selon : $P = A^{-1}B$.

Le problème de cette approche matricielle est qu'elle devient là aussi rapidement inutilisable dès lors que l'on a plusieurs centaines de stations de base ou quelques milliers de stations mobiles à traiter. En effet le problème d'inversion de matrice est un problème en $N^3$. L'approche matricielle n'est donc pas non plus indiquée ici.

Qui plus est, cette approche purement mathématique ne tient nullement compte des contraintes sur les puissances de transmission. Celles-ci doivent se situer en pratique entre une valeur de puissance maximale et une valeur de puissance minimale prédéterminées. Ainsi, l'inversion de matrice peut déboucher sur des valeurs de puissances trop importantes ou trop faibles, c'est-à-dire en dehors de la plage des valeurs acceptables.

Enfin, un traitement matriciel est inadapté au traitement du soft-handover. Le soft-handover est la faculté pour le réseau d'établir par exemple (cas d'une liaison montante) plusieurs liaisons simultanées entre une station mobile et plusieurs stations de base et de garantir ainsi un qualité globale de transmission en dépit de la défaillance d'une liaison élémentaire. Dans un tel cas, seule compte la somme des niveaux de rapport signal sur bruit plus interférence des signaux sur les liaisons concernées. Prendre en considération la somme de ces rapports revient à transformer un problème linéaire en un problème quadratique non susceptible d'être résolu par une simple méthode matricielle.

Le problème à la base de l'invention est celui du contrôle de puissance dans un système de télécommunication à pluralité d'émetteurs et pluralité de récepteurs ne nécessitant qu'un nombre de calculs raisonnable.

De manière plus spécifique, le problème à la base de l'invention est un contrôle de puissance d'émission de complexité réduite pour une liaison montante ou une liaison descendante de système de télécommunication cellulaire fonctionnant en accès multiple par répartition de code.

Selon un mode avantageux de réalisation de l'invention, le contrôle de puissance est rendu compatible avec le respect des plages de puissances de transmission.

Selon un autre mode avantageux de réalisation de l'invention, le contrôle de puissance est compatible avec un fonctionnement du système en mode soft-handover.

Selon un autre mode avantageux de réalisation de l'invention, le contrôle de puissance peut être effectué de manière dynamique pour suivre les variations des caractéristiques du système.

L'invention concerne également une méthode de contrôle de niveau de signaux d'émission dans un système de télécommunication comprenant une pluralité d'émetteurs Ei et une pluralité de récepteurs Rj, chaque récepteur Rj pouvant recevoir des signaux émis par un sous-ensemble Sj d'émetteurs et chaque canal de transmission Lij entre un émetteur Ei et un récepteur Rj pouvant être perturbé par une transmission sur un canal quelconque Lkl avec (k,l)≠(i,j), la perturbation étant proportionnelle à la puissance Ekl transmise sur ce canal, le niveau de signal Rij reçu par le récepteur Rj en provenance de l'émetteur Ei pouvant alors s'exprimer pair :

$$R_{ij} = G_{ij} E_{ij} + \sum_{k,l \neq i,j} G_{kl}^{ij} E_{kl} + N_0 \quad \text{soit encore} \quad R_{ij} = G_{ij} E_{ij} + Ext_{i,j} + N_0$$

où $G_{ij}$ est l'atténuation sur le canal $L_{ij}$ et

$G_{kl}^{ij}$ est le coefficient de couplage entre le canal $L_{kl}$ et le canal $L_{ij}$

$N_0$ est le bruit de fond

$Ext_{i,j}$ est l'interférence sur le canal $L_{ij}$

la méthode étant caractérisée par les étapes suivantes :

(a) initialisation des valeurs Exti,j à une valeur prédéterminée
(b) calcul des valeurs Eij permettant de garantir un rapport signal/bruit SNRij donné sur le canal Lij étant donné les niveaux d'interférence Exti,j ;
(c) évaluation des niveaux d'interférence Exti,j sur les canaux Lij en fonction des niveaux de puissance d'émission Ekl ;

les étapes (b) et (c) étant itérées tant que pour un canal quelconque Lij l'écart entre deux niveaux d'interférence consécutifs Exti,j est supérieur à une valeur de seuil.

L'invention concerne encore une méthode de contrôle de niveau de signaux d'émission dans un système de télécommunication comprenant une pluralité d'émetteurs Ei et une pluralité de récepteurs Rj, chaque récepteur Rj pouvant recevoir des signaux émis par un sous-ensemble Sj d'émetteurs et chaque canal de transmission Lij entre un émetteur Ei et un récepteur Rj pouvant être perturbé par une transmission sur un canal quelconque Lkl avec (k,l)≠(i,j), la perturbation étant proportionnelle à la puissance Ekl transmise sur ce canal, le niveau de signal Eij reçu par le récepteur Rj en provenance de l'émetteur Ei pouvant alors s'exprimer par

$$R_{ij} = G_{ij} E_{ij} + \sum_{\substack{k \in S_j \\ (k,l) \neq (i,j)}} G_{kl}^{ij} E_{kl} + \sum_{k \in S_j} G_{kl}^{ij} E_{kl} + N_0 \quad \text{soit encore} \quad R_{ij} = \left[ G_{ij} E_{ij} + \sum_{\substack{k \in S_j \\ (k,l) \neq (i,j)}} G_{kl}^{ij} E_{kl} + N_0 \right] + Extra_{,j}$$

où $G_{ij}$ est l'atténuation sur le canal $L_{ij}$

et $G_{kl}^{ij}$ est le coefficient de couplage entre le canal $L_{kl}$ et le canal $L_{ij}$

$N_o$ est le niveau de puissance du bruit de fond

$Extra_{i,j}$ est l'interférence sur le canal $L_{ij}$ due aux émetteurshors de $S_J$

la méthode étant caractérisée par les étapes suivantes :

(a) initialisation des valeurs Extrai,j à une valeur prédéterminée
(b) calcul des valeurs Eij permettant de garantir un rapport signal/bruit SNRij donné sur le canal Lij étant donné les niveaux d'interférence Extrai,j ;
(c) évaluation des niveaux d'interférence Extraij sur les canaux Lij en fonction des niveaux de puissance d'émission Ekl ;

les étapes (b) et (c) étant itérées tant que pour un canal quelconque Lij l'écart entre deux niveaux d'interférence consécutifs Extrai,j est supérieur à un seuil prédéterminé.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

la Fig. 1 représente des liaisons montantes entre des mobiles et une station de base isolée les servant;
la Fig. 2 représente des liaisons descendantes entre une station de base isolée et des mobiles qu'elle sert ;
la Fig. 3 représente un groupe de cellules adjacentes avec liaisons montantes interférentes ;
la Fig. 4 représente les étapes du procédé de contrôle de puissance selon l'invention dans le cas du système de la Fig. 3 ;

la Fig. 5 représente un groupe de cellules adjacentes avec liaisons descendantes interférentes ;

la Fig. 6 représente les étapes du procédé de contrôle de puissance selon l'invention dans le cas du système de la Fig. 5 ;

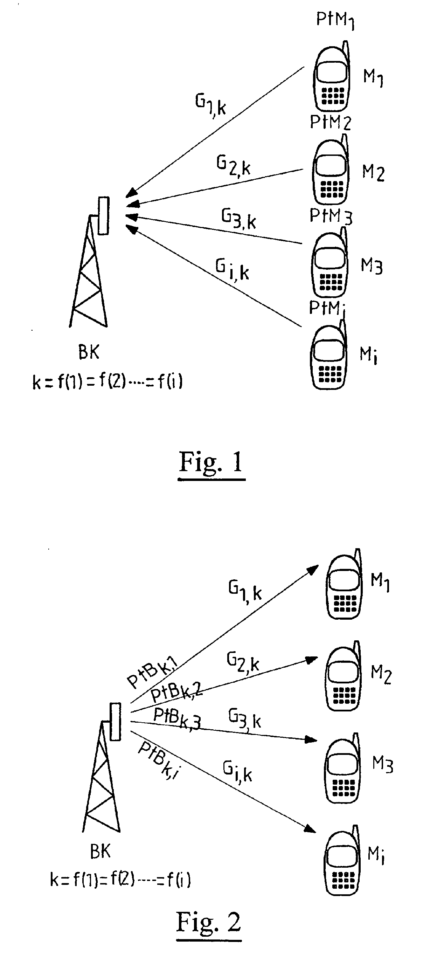

la Fig. 1 représente le cas d'une station de base isolée servant une pluralité de mobiles M1, M2 ,...Mi qui établissent avec cette dernière des liaisons montantes.

Le contrôle de puissance dans le cas unicellulaire revient à rechercher les puissances de transmission PtMi des différents mobiles connaissant les rapports signal/bruit SNRi requis pour les liaisons avec la station de base.

L'équation (1) peut alors s'écrire :

$$SNR_i = \frac{P_i}{N_o + (1-\eta)\sum_{j \neq i} P_j}$$

SNRi = rapport signal à bruit du signal reçu par la station de base et émis par la station mobile Mi ;

Pi = PtMi*Gi,k puissance reçue par la station de base du signal émis par la station mobile Mi ;

$\eta$ = facteur de réduction d'interférence intra-cellulaire.

Comme montré à l'annexe A, la solution à ce problème est donnée par :

$$P_i = \frac{SNR_i * D_{Factor}}{1 + (1-\eta)SNR_i} \qquad (3)$$

avec

$$D_{Factor} = \frac{N_o}{1 - \sum_j \frac{1}{d_j}} \qquad (4)$$

et

$$d_j = 1 + \frac{1}{SNR_j(1-\eta)}$$

Les puissances de transmission des stations mobiles Mi sont alors données par :

$$PtM_i = \frac{P_i}{G_{i,k}}$$

La Fig. 2 représente le cas d'une station de base isolée servant une pluralité de mobiles M1, M2 ,...Mi et établissant avec ces derniers des liaisons descendantes.

Le contrôle de puissance dans le cas unicellulaire revient à rechercher les puissances de transmission PtBk, i des signaux transmis par la station de base Bk aux différents mobiles Mi connaissant les rapports signal/bruit SNRi requis pour les liaisons descendantes.

L'équation (2) peut alors s'écrire :

$$SNR_i = \frac{PtB_k * G_{i,k}}{No + \alpha\left(PtB_k - PtB_{k,i}\right)G_{i,k}}$$

avec

$$PtB_k = PtcB_k + \sum_{\forall i / f(i)=k} PtB_{f(i),i}$$

Si l'on connaît le niveau PtBk de puissance de transmission de la station de base, la solution s'écrit simplement :

$$PtB_{k,i} = \frac{SNR_i}{1+\alpha SNR_i} \frac{No + \alpha PtB_k * G_{i,k}}{G_{i,k}}$$

$$(5)$$

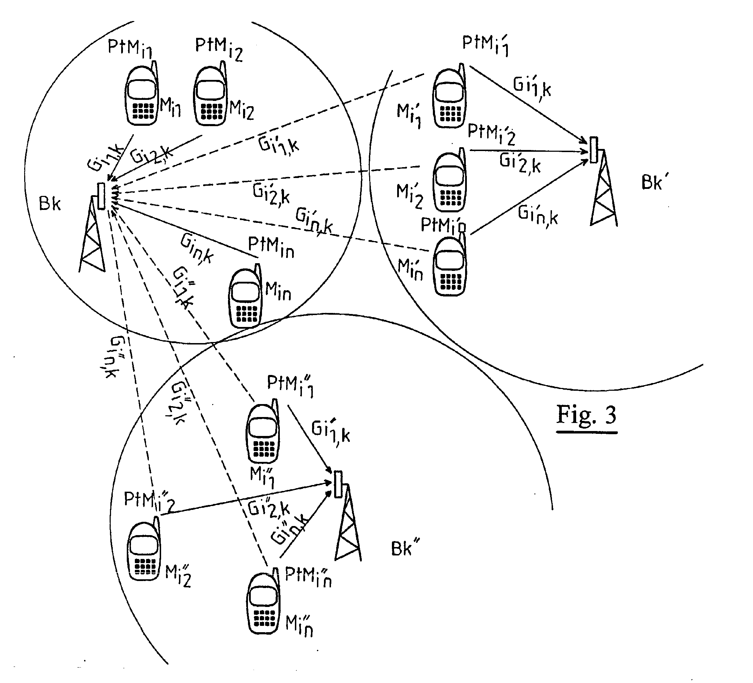

La Fig. 3 illustre un système de télécommunication cellulaire composé d'une pluralité de cellules adjacentes, chaque station de base Bk servant une pluralité de mobiles Mi1, Mi2,... Mi1n,

Les liaisons considérées sont des liaisons montantes.

La station de base Bk reçoit des signaux utiles des différents mobiles Mi1,Mi2...,Min qu'elle sert mais également des signaux interférents provenant des mobiles servis par d'autres stations de base.

L'invention part de la constatation que l'on peut ramener le cas de plusieurs stations de base adjacentes au cas de plusieurs stations de base isolées à condition de pouvoir apprécier pour chaque station de base le niveau d'interférence extracellulaire produit par les mobiles situés à l'extérieur de la cellule considérée.

En effet, si l'on suppose le niveau d'interférence extra-cellulaire connu pour chaque station de base, celui-ci s'ajoute au niveau de bruit de fond et l'on est ramené à la juxtaposition de N problèmes unicellulaires dont la solution a été décrite sous la Fig. 1.

Cependant, évaluer le niveau d'interférence extracellulaire pour une station de base nécessite de connaître les puissances de transmission des stations mobiles extérieures à la cellule, puissances qui elles-mêmes dépendent des niveaux d'interférence extra-cellulaire de leurs cellules servantes respectives et donc, en particulier, des puissances d'émission des mobiles de la cellule que l'on cherche précisément à déterminer.

La solution proposée par l'invention consiste à une détermination récursive du niveau d'interférence extra-cellulaire pour chaque cellule. A chaque itération, on utilise un niveau d'interférence extra-cellulaire estimé pour chaque station de base. Ce niveau est utilisé pour obtenir les puissances de transmission des stations mobiles servis par cette station de base, selon le procédé unicellulaire mentionné plus haut. Une fois toutes les stations traitées, l'interférence extra-cellulaire reçue par chaque cellule est à nouveau calculée à partir des puissances de transmission des stations mobiles se situant à l'extérieur de la cellule servie par ladite station. Ces étapes sont répétées tant que l'on observe une différence jugée excessive entre deux niveaux d'interférence extra-cellulaire consécutifs pour une même station de base.

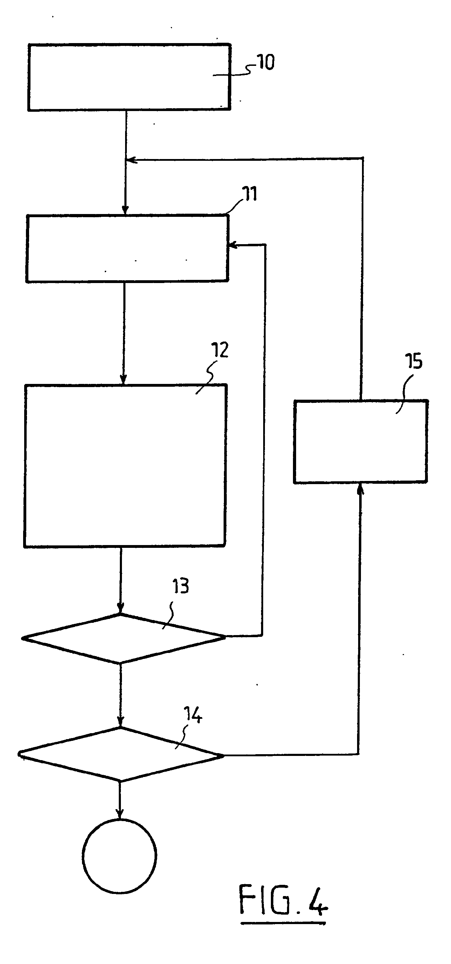

La Fig. 4 illustre la méthode de détermination récursive du niveau d'interférence extra-cellulaire dans une liaison montante.

La méthode de détermination débute par une étape d'initialisation (10).

Le niveau d'interférence extra-cellulaire Iextk est initialisé pour chaque cellule k, par exemple à une valeur nulle ou à la valeur issue d'une précédente estimation :

$$\forall k, \; Iext\_old_k = 0$$

Une marge est également définie préalablement pour paramétrer la précision de la méthode récursive. La réduction de cette marge aura pour effet d'augmenter la fréquence d'itération et d'améliorer la précision de la convergence. La différence entre deux niveaux d'interférence extra-cellulaire devra être rendue être inférieure à cette marge. La différence de deux niveaux consécutifs d'interférence extra-cellulaire est initialisée à deux fois cette marge, de sorte que la différence initiale est à considérer comme une marge prise sur le niveau de rapport signal à bruit requis : $\forall k$, Deltak=2*marge.

Ainsi, le niveau de rapport signal à bruit obtenu en fin d'itération sera compris entre le signal à bruit requis et cette valeur plus deux fois ladite marge.

Dans une première étape (11), on effectue le calcul de contrôle de puissance suivant le procédé unicellulaire pour toutes les stations de base qui ont une estimation d'interférence extra-cellulaire jugée excessive (soit Deltak>Marge). Pour ce faire, on utilise l'équation (3) en remplaçant dans la formule (4) No par No+Iext_upk où Iext_upk (que nous noterons dans la présente section Iext_oldk) est le niveau d'interférence extra-cellulaire dernièrement estimé. Autrement dit, l'étape (11) peut se résumer par:

$$\forall k \text{ si Deltak> marge, } \forall i \text{ tel que } f(i)=k \text{ calculer PtMi selon (3)}$$

Dans une seconde étape (12), on calcule le nouveau niveau d'interférence extracellulaire Iext_newk pour toutes les stations de base à partir des valeurs de puissance de transmission PtMi dernièrement calculées. On obtient ensuite l'erreur d'estimation comme la valeur absolue du logarithme du ratio Iext_newk/Iext_oldk où Iext_oldk est le niveau d'interférence précédent. Si cette erreur dépasse la marge jugée raisonnable, on rafraîchit le niveau Iext_oldk à la valeur Iext_newk, et une nouvelle itération sera effectuée pour cette station de base. Autrement dit, l'étape (12) peut se résumer par :

Fin = 1;

$$\forall k, \ Iext\_new_k = \sum_{i, f(i) \neq k} PtM_i G_{i,k};$$

$$\forall k, \ Delta_k = \left| \ln \frac{Iext\_new_k}{Iext\_old_k} \right|;$$

$$\forall k, \text{ If } Delta_k > m\arg e \text{ then } Iext\_old_k = Iext\_new_k, \ Fin = 0;$$

où Fin est un drapeau d'arrêt.

La première boucle (simulation statique) s'arrête lorsque toutes les valeurs d'interférence extra-cellulaire sont stables à la marge près. Si la variation entre deux valeurs d'interférence extra-cellulaire consécutives pour une station de base quelconque excède la marge (c'est à dire si Fin=0) la boucle est itérée. Ce test d'arrêt (Fin=1 ?) est représenté en (13).

On notera que complexité de l'algorithme est une complexité en 0(N).

Lorsque les caractéristiques du système évoluent au cours du temps, par exemple si un mobile change de cellule ou si une liaison est interrompue/créée, il est souhaitable de procéder à une nouvelle évaluation des niveaux d'interférence extra-cellulaire. Le test de non variation des caractéristiques du système est représenté en (14). Si ces caractéristiques sont inchangées, l'algorithme se termine. Sinon la boucle décrite plus haut est itérée (simulation dynamique) avec des paramètres actualisés (f(i), SNRi, Gk,i) dans (15). Les niveaux d'interférence extra-cellulaire dernièrement estimés servent de valeurs initiales pour la nouvelle boucle.

Il est possible dans la première étape ci-dessus de tenir compte des valeurs minimale et maximale de puissance de transmission des mobiles. Cela peut être réalisé très simplement en remplaçant la valeur PtMi hors intervalle par la valeur minimale, respectivement par la valeur maximale.

En outre, le procédé de contrôle de puissance peut supporter un réseau géré en mode soft handover.

Comme déjà indiqué plus haut le mode soft handover consiste, pour le lien montant, à recevoir par différentes stations de base le même signal émis par une station mobile. Les signaux reçus représentatifs du même signal émis peuvent être recombinés pour améliorer la qualité de la communication.

Diverses techniques de recombinaison existent. La plus courante consiste à effectuer la démodulation de chacun de ces signaux de manière indépendante, et à sélectionner le signal qui a la meilleure qualité après démodulation (technique aussi appelée Selection Combining). Dans ce dernier cas, le signal transmis par la station mobile en situation de soft handover ne diffère pas de celui qu'il aurait dû transmettre en situation de non soft handover.

La diversité ajoutée en cours de soft handover peut néanmoins résulter en un niveau moindre de puissance de transmission nécessaire pour assurer une certaine qualité de service. Ceci peut être facilement pris en compte en comptant un gain dans le SNR requis. Ce gain est cependant dépendant de l'environnement. Dans des environnements à forte diversité (large dispersion de retard du signal, diversité de réception, diversité de transmission,.., le gain additionnel est marginal et peut être négligé.

Selon un mode de réalisation de l'invention, on effectue un tri des liens qu'a une station de base avec les différentes stations mobiles. Les liens qui correspondent au meilleur lien d'une station mobile (parmi les liens de cette station mobile avec diverses stations de base) sont seuls pris en compte pour la détermination du contrôle de puissance unicellulaire. Les autres liens sont simplement considérés comme de l'interférence extra-cellulaire. La méthode de contrôle de puissance peut donc supporter le soft handover sans changer de principe.

Enfin , les calculs de niveaux de puissance peuvent être simplifiés si l'on ne tient compte, dans l'équation (1), uniquement des contributions des stations mobiles les plus fortement reçues par la station de base Bf(i) pour évaluer l'interférence extra-cellulaire. Dans ce cas l'équation (1) peut s'écrire :

$$SNR_i = \frac{PtM_i * G_{i,f(i)}}{No + (1-\eta) \sum_{\substack{j \neq i \\ f(j)=f(i)}} PtM_j * G_{j,f(i)} + \sum_{\substack{j \\ f(j) \neq f(i) \\ f(j) \in E(i)}} PtM_j * G_{j,f(i)}}$$

où E(i) est l'ensemble des stations mobiles les plus fortement reçues de la station de base Bf(i). Les contributions hors de l'ensemble E(i) sont supposées nulles et n'interviennent plus dans le calcul.

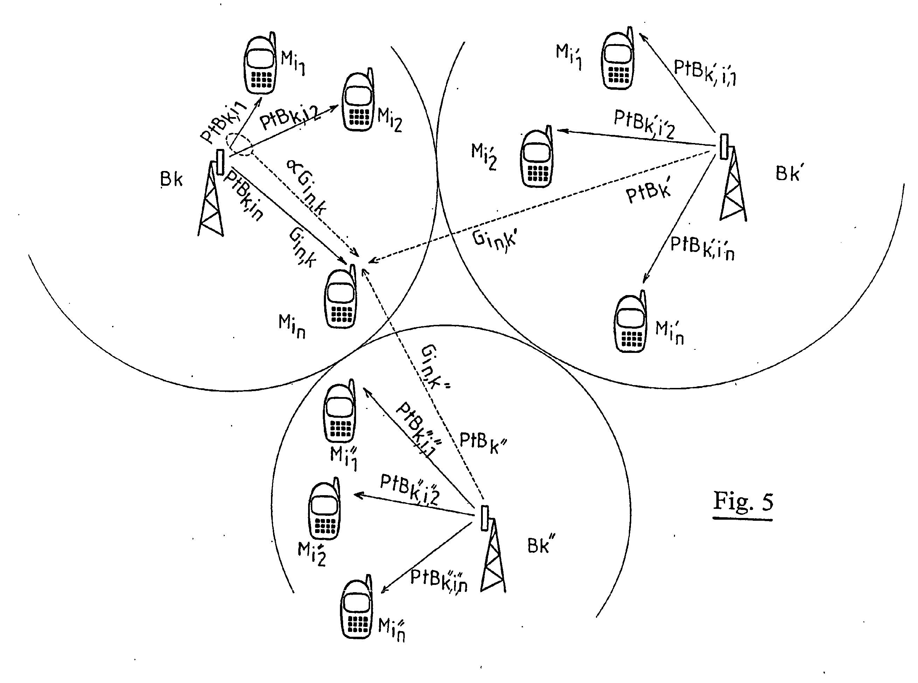

La Fig. 5 illustre un système de télécommunication cellulaire composé d'une pluralité de cellules adjacentes, chaque station de base Bk servant une pluralité de mobiles Mi1, Mi2,... Mi1n,

Les liaisons considérées sont des liaisons descendantes.

La station de base Bk transmet des signaux utiles aux différents mobiles Mi1,Mi2...,Min. Un mobile donné recevra un signal utile de sa station servante mais également des signaux interférents provenant des mobiles servis par d'autres stations de base. Une liaison entre un mobile Mi et sa station de base servante sera également affectée par les autres liaisons entre les autres mobiles de sa cellule et la station servante en raison de la non parfaite orthogonalité des signaux descendants transmis (interférence intra-cellulaire).

L'invention part de la constatation que l'on peut ramener le cas de plusieurs stations de base adjacentes au cas de plusieurs stations de base isolées à condition de pouvoir apprécier pour chaque mobile le niveau d'interférence extracellulaire produit par les stations de base autres que la station servante.

La même approche que pour la liaison montante peut être retenue. L'équation (5) peut alors être réécrite en remplaçant N0 par N0+Iext_downi où Iext_downi (que nous noterons dans la présente section Iexti) est l'interférence extra-cellulaire reçue par le mobile Mi :

$$PtB_{f(i),i} = \frac{\left( (\alpha - 1)PtB_{f(i)} + \frac{No + \sum_{\forall k} PtB_k * G_{i,k}}{G_{i,f(i)}} \right) SNR_i}{(1 + \alpha SNR_i)} \qquad (6)$$

De même que pour la liaison montante, la solution proposée par l'invention consiste en une détermination récursive du niveau d'interférence extra-cellulaire pour chaque mobile. A chaque étape, on suppose ces niveaux connus et l'on en déduit les valeurs de puissance des signaux PtBf(i),i selon l'équation (6). Puis, on utilise ces niveaux de puissance de transmission pour déterminer la valeur du niveau d'interférence effective reçue par chaque mobile. Ces étapes sont répétées tant que l'on observe une différence jugée excessive entre deux niveaux consécutifs d'interférence reçue par une station mobile.

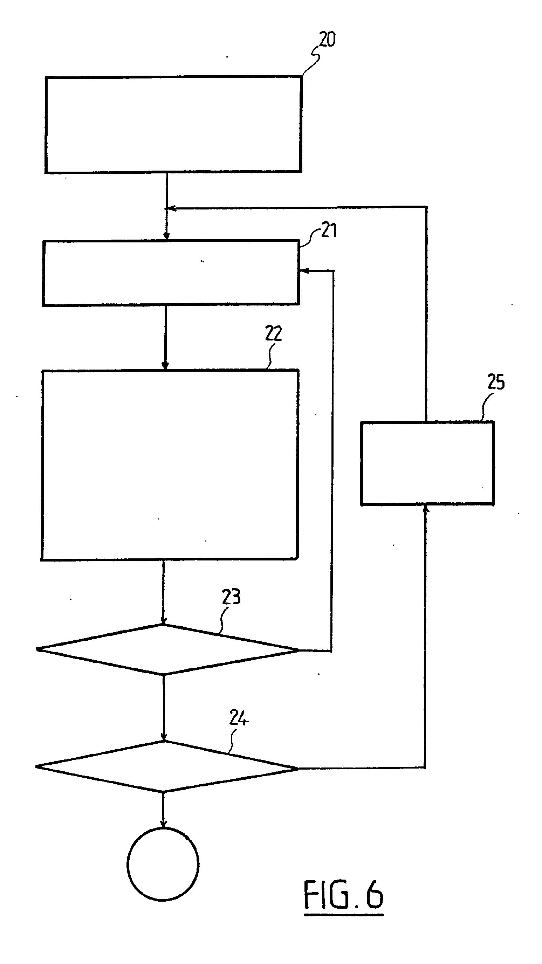

La Fig. 6 illustre la méthode de détermination récursive du niveau d'interférence extra-cellulaire pour une liaison descendante.

La méthode de détermination débute par une étape d'initialisation (20).

Le niveau de puissance totale d'émission PtBk de chaque station de base est initialisé, par exemple à la valeur de puissance des signaux communs PtcBk ou à la valeur d'une précédente estimation. Autrement dit : $\forall k$, PtBk= PtcBk.

Le niveau d'interférence extra-cellulaire initial de chaque mobile en est ensuite déduit :

$$\forall i, \ Iext\_old_i = N_0 + \sum_k PtB_k * G_{i,k} + (\alpha - 1)PtB_{f(i)}G_{i,f(i)}$$

Une marge est également définie préalablement pour paramétrer la précision de la méthode récursive. La réduction de cette marge aura pour effet d'augmenter la fréquence d'itération et d'améliorer la précision de la convergence. La différence entre deux niveaux d'interférence extra-cellulaire devra être rendue être inférieure à cette marge. La différence de deux niveaux consécutifs d'interférence extra-cellulaire est initialisée à deux fois cette marge, de sorte que la différence initiale est à considérer comme une marge prise sur le niveau de rapport signal à bruit requis. Autrement dit :

$$\forall i, \ Deltai = 2*marge.$$

Ainsi, le niveau de rapport signal à bruit obtenu en fin d'itération sera compris entre le signal à bruit requis et cette valeur plus deux fois la marge.

Dans une première étape (21), on effectue le calcul de contrôle de puissance suivant le procédé unicellulaire pour toutes les stations mobiles qui ont une estimation d'interférence extra-cellulaire jugée excessive (soit Deltai>Marge). Pour ce faire on utilise l'équation (6) en remplaçant dans la formule (4) No par No+ Iext_downi, où Iext_downi (que nous noterons dans la présente section Iext_oldi) est le niveau d'interférence extra-cellulaire dernièrement estimé. Autrement dit, l'étape (21) peut se résumer par :

$$\forall i, \ si \ Deltai > \ marge \ calculer \ PtBi,f(i) \ selon \ (6)$$

Dans une seconde étape (22), on calcule dans un premier temps la puissance totale d'émission de chaque station de base à partir des valeurs PtBf(i),i (et des signaux communs) puis les nouveaux niveaux d'interférence extra-cellulaire Iext_newi pour toutes les stations mobiles à partir des valeurs de puissance de transmission PtMi dernièrement calculées. On obtient ensuite l'écart d'estimation comme la valeur absolue du logarithme du ratio Iext_newi/Iext_oldi où Iext_oldi est le niveau d'interférence précédent. Si cette écart dépasse la marge jugée raisonnable, on rafraîchit le niveau Iext_oldi à la valeur Iext_newi, et une nouvelle itération sera effectuée pour cette station mobile. Autrement dit, l'étape (22) peut s'écrire :

*Fin* = 1;

$$\forall k, \ PtB_k = PtcB_k + \sum_{i,f(i)=k} PtB_{f(i),i};$$

$$\forall i, \ Iext\_new_i = N_0 + \sum_k PtB_k * G_{i,k} + \left[(\alpha - 1)PtB_{f(i)} + \alpha PtB_{f(i),i}\right]G_{i,f(i)};$$

$$\forall i, Delta_i = \left| \ln \frac{Iext\_new_i}{Iext\_old_i} \right|;$$

$$\forall i, \; If \; Delta_i > m\arg e \quad then \quad Iext\_old_i = Iext\_new_i, Fin = 0;$$

où Fin est un drapeau d'arrêt.

La première boucle (contrôle statique) s'arrête lorsque toutes les valeurs d'interférence extra-cellulaire sont stables à la marge près. Si la variation entre deux valeurs d'interférence extra-cellulaire consécutifs d'une station mobile quelconque excède la marge (c'est à dire si Fin=0) la boucle est itérée. Ce test d'arrêt est représenté en (23).

On notera que la complexité de l'algorithme est là aussi une complexité en 0(N).

Lorsque les caractéristiques du système évoluent au cours du temps, par exemple si un mobile change de cellule ou si une liaison est interrompue/créée, il est souhaitable de procéder à une nouvelle évaluation des niveaux d'interférence extra-cellulaire. Le test de non variation des caractéristiques du système est représenté en (24). Si ces caractéristiques sont inchangées l'algorithme se termine. Sinon la boucle décrite plus haut est itérée (simulation dynamique) avec des paramètres actualisés (f(i), SNRi, Gk,i) dans (25). Les niveaux de puissance totale des stations de base dernièrement estimés servent alors de valeurs initiales pour la nouvelle boucle.

Il est possible dans la seconde étape ci-dessus de tenir compte des valeurs minimale et maximale de puissance totale de transmission des stations de base. Cela peut être réalisé très simplement en remplaçant la valeur PtBk hors intervalle par la valeur minimale, respectivement par la valeur maximale.

En outre, il est également possible dans la seconde étape ci-dessus de tenir compte des valeurs minimale et maximale de puissance dédiée de transmission PtBk,i de toute station de base Bk vers une station mobile Mi. Cela peut être réalisé très simplement en remplaçant la valeur PtBk,i hors intervalle par la valeur minimale, respectivement la valeur maximale.

En outre, le procédé de contrôle de puissance peut supporter un réseau géré en mode soft handover.

Le mode soft handover consiste, pour la liaison descendante, à recevoir par une station mobile le même signal émis par différentes stations de base. Les signaux reçus représentatifs du même signal émis peuvent être recombinés pour améliorer la qualité de la communication. Le fait que dans que, dans la liaison descendante, le même récepteur reçoive les différents signaux permet une recombinaison plus judicieuse que dans la liaison montante, à savoir une recombinaison pondérée de tous ces signaux (technique aussi appelée Maximum Ratio Combining). Cette recombinaison est judicieusement implémentée dans le récepteur RAKE de la station mobile.

La propriété des récepteurs RAKE est que le rapport signal à bruit du signal recombiné est égal à la somme des rapports signal à bruit des signaux utilisés pour la recombinaison.

On le voit, prendre en compte cette dernière contrainte impose de résoudre un problème légèrement différent du premier, à savoir :

$$SNR_i = \sum_{l < AS_i} SNR_{i,l}$$

$$SNR_{i,l} = \frac{PtB_{f(i,l),i} * G_{i,f(i,l)}}{No + \alpha\left(PtB_{f(i,l)} - PtB_{f(i,l),i}\right)G_{i,f(i,l)} + \sum_{k \neq f(i)} PtB_k * G_{i,k}}$$

où ASi est la taille de l'ensemble des bases actives pour le mobile Mi. Si l'on suppose de plus que le réseau est à même de réaliser la fonction d'équilibre de puissance transmises par les diverses stations de base impliquées dans chaque handover, on peut réécrire :

$$\forall l < AS_i, PtB_{f(i,l),i} = P_i$$

$$P_i = \frac{SNR_{i,l}}{G_{i,f(i,l)}} \frac{\left(P_{total} - (1-\alpha)G_i PtB_{f(i,l)}\right)}{1 + \alpha SNR_{i,l}}$$

$$SNR_i = \sum_{l<AS_i} SNR_{i,l}$$

avec

$$P_{total} = N_0 + \sum_k PtB_k * G_{i,k}$$

On remarquera que même exprimé de manière littérale dans sa forme la plus générale, le problème n'est plus linéaire (somme de fractions n'ayant pas le même dénominateur). Il peut cependant être résolu selon un mode avantageux de l'invention, en supposant que :

$$1 \rangle\rangle \alpha SNR_{i,l}$$

Ceci revient à dire que le canal de transmission est peu perturbant en termes de préservation de l'orthogonalité, ou bien encore que le débit utilisé nécessite de faible SNR requis (du fait de l'étalement de spectre). On obtient alors

$$P_i = \frac{SNR_{i,l}}{G_{i,f(i,l)}} \left( P_{total} - (1-\alpha)G_i PtB_{f(i,l)} \right)$$

$$SNR_i = \sum_{l<AS_i} SNR_{i,l}$$

Soit directement

$$P_i = \frac{SNR_i}{\sum_{l<AS_i} \dfrac{G_{i,f(i,l)}}{P_{total} - (1-\alpha)G_{i,f(i,l)} PtB_{f(i,l)}}}$$

Enfin, comme pour la liaison montante, les calculs de niveaux de puissance peuvent être simplifiés si l'on ne tient compte dans l'équation (2), pour évaluer l'interférence extra-cellulaire, uniquement des contributions des stations de base les plus fortement reçues par la station mobile Mi. Dans ce cas l'équation (2) peut s'écrire :

$$SNR_i = \frac{PtB_{f(i),i} * G_{i,f(i)}}{No + \alpha\left(PtB_{f(i)} - PtB_{f(i),i}\right)G_{i,f(i)} + \sum_{\substack{k \neq f(i) \\ k \in E(i)}} PtB_k * G_{i,k}}$$

où E(i) est l'ensemble des stations de base les plus fortement reçues de la station mobile Mi. Les contributions hors de l'ensemble E(i) sont supposées nulles et n'interviennent plus dans le calcul.

*Annexe A*

Ces équations peuvent être reformulées :

$$\sum_{j \neq i} P_j - \frac{P_i}{SNR_i(1-\eta)} = -\frac{N_o + I_{ext}}{(1-\eta)} = L_i \quad (10)$$

Définissons à présent les matrices carrées NxN suivantes :

$$D = \begin{bmatrix} d_0 & 0 & 0 & \dots & 0 \\ 0 & d_1 & 0 & \dots & 0 \\ 0 & 0 & d_2 & \dots & 0 \\ \dots & \dots & \dots & \dots & \dots \\ 0 & 0 & 0 & \dots & d_{N-1} \end{bmatrix} \qquad \text{avec} \quad d_i = -1 - \frac{1}{SNR_i(1-\eta)}$$

$$A = \begin{bmatrix} 1 & 1 & 1 & \dots & 1 \\ 1 & 1 & 1 & \dots & 1 \\ 1 & 1 & 1 & \dots & 1 \\ \dots & \dots & \dots & \dots & \dots \\ 1 & 1 & 1 & \dots & 1 \end{bmatrix}$$

Résoudre le système d'équations (10) revient à trouver le vecteur $\vec{P} = (P_0, P_1, \dots P_{N-1})$ qui vérifie l'équation suivante :

$$\boxed{(D + A) \circ \vec{P} = \vec{L}} \qquad \text{soit} \qquad \boxed{\vec{P} = (D + A)^{-1} \vec{L}}$$

où

$$\vec{L} = -\frac{N_o + I_{ext}}{(1-\eta)}(1,1,\dots 1)$$

Dans la plupart des cas, (D+A) peut être facilement inversée de la manière suivante :

$$(D + A)^{-1} = \left[ I - \frac{1}{1+S} D^{-1} \circ A \right] \circ D^{-1}$$

où $S = \sum_i \dfrac{1}{d_i}$

Si l'on définit

$$\Sigma = \sum_j \frac{L_j}{dj}$$

la solution ci-dessus s'exprime aussi selon :

$$P_i = \frac{1}{d_i}\left(L_i - \frac{\Sigma}{1+S}\right)$$

On remarque que Li est le même $\forall i$, ce qui se réduit encore selon :

$$P_i = \frac{1}{d_i}\left(L_i - \frac{\Sigma}{1+S}\right)$$

soit :

$$P_i = \frac{N_o + I_{ext}}{(1-\eta)+1/SNR_i}\left(\frac{1}{1+S}\right) = \frac{D_{Factor}}{(1-\eta)+1/SNR_i}$$

## Revendications

1. Méthode de contrôle de puissance de signaux montants dans un système de télécommunication cellulaire à accès multiple par répartition de code comprenant une pluralité de stations de base Bk servant respectivement des cellules Ck ainsi qu'une pluralité de stations mobiles Mi, chaque station mobile Mi étant servie par au moins une station de base Bf(i), chaque liaison montante entre une station mobile Mi et la station de base Bf(i) étant perturbée par un bruit comprenant une interférence extra-cellulaire générée par les signaux montants de stations mobiles situées à l'extérieur de la cellule Cf(i) et une interférence intra-cellulaire générée par les signaux montants de stations mobiles Mj, j$\neq$i situées à l'intérieur de la cellule Cf(i)
   ladite méthode étant **caractérisée par** les étapes suivantes :

   (a) pour chaque station de base Bk, initialisation du niveau d'interférence extra-cellulaire Iext_up,k à une valeur prédéterminée;
   (b) pour chaque station mobile Mi, calcul du niveau de puissance PtMi du signal montant permettant à la liaison montante entre ladite station mobile et la station de base servante Bf(i) de garantir un rapport signal/ bruit SNRi prédéterminé étant donné le niveau courant d'interférence extra-cellulaire Iext_up, f(i) de la cellule Cf(i) ;
   (c) pour chaque station de base Bk, évaluation du niveau d'interférence extra-cellulaire Iext_up,k de la cellule Ck en fonction des niveaux courants de puissance PtMi des signaux montants émis par des stations mobiles situées à l'extérieur de la cellule Ck ;

   les étapes (b) et (c) étant itérées tant que l'écart entre deux niveaux consécutifs d'interférence extra-cellulaire d'une quelconque cellule Ck excède une valeur de marge prédéterminée.

**2.** Méthode de contrôle de puissance selon la revendication 1, **caractérisée en ce qu'**à l'étape (b) le calcul du niveau de puissance PtMi des stations mobiles Mi servies par une station de base Cf(i) n'est pas effectué si l'écart entre le niveau courant et le niveau précédent d'interférence extra-cellulaire Iext_up,f(i) de la cellule Cf(i) est inférieur à ladite valeur de marge.

**3.** Méthode de contrôle de puissance selon la revendication 2, **caractérisée en ce qu'**à l'étape (b) les niveaux de puissance PtMi sont limités à une valeur maximale et à une valeur minimale.

**4.** Méthode de contrôle de puissance selon la revendication 2 ou 3, **caractérisée en ce qu'**à l'étape (c) le niveau courant d'interférence extra-cellulaire d'une cellule Ck n'est pas rafraîchi à la valeur nouvellement évaluée si l'écart entre la valeur nouvellement évaluée et la valeur précédente est inférieure à ladite valeur de marge.

**5.** Méthode de contrôle de puissance selon l'une des revendications 2 à 4, **caractérisée en ce qu'**à l'étape (a), la différence entre deux valeurs consécutives d'interférence extra-cellulaire est initialisée au double de ladite valeur de marge.

**6.** Méthode de contrôle de puissance selon l'une des revendications précédentes, **caractérisée en ce que** le calcul du niveau de puissance PtMi de l'étape (b) est effectué selon la formule suivante:

$$PtMi = \frac{1}{G_{i,f(i)}} \frac{SNR_i \cdot D_{factor}}{1+(1-\eta)SNR_i}$$

où

$$D_{factor} = \frac{N_0 + Iext\_up, f(i)}{1 - \sum_j 1/dj} \quad \text{avec} \quad dj = 1 + \frac{1}{(1-\eta)SNR_j}$$

$\eta$ étant le facteur de réduction d'interférence intra-cellulaire
$G_{i,f(i)}$ étant le facteur d'atténuation de la liaison montante de $M_i$ vers $B_{f(i)}$
$N_0$ étant le niveau de puissance du bruit de fond

et que l'évaluation du niveau d'interférence extra-cellulaire Iext_up,k de l'étape (c) est effectuée selon la formule:

$$Iext\_up,k = \sum_{\forall i, f(i) \neq k} PtMi * G_{i,k}$$

où $G_{i,k}$ est le facteur d'atténuation de la transmission du mobile Mi à la station de base $B_k$

**7.** Méthode de contrôle de puissance selon la revendication 6, **caractérisée en ce que** dans le calcul de Iext_up,k seuls les termes correspondant aux stations mobiles les plus interférentes sont pris en compte.

**8.** Méthode de contrôle de puissance selon une des revendications précédentes, **caractérisée en ce que** la boucle d'itération des étapes (b) et (c) est elle-même itérée lorsqu'une caractéristique d'une liaison montante entre une station mobile Mi et sa station de base servante Bf(i) est modifiée ou lorsqu'un mobile change de station servante.

**9.** Méthode de contrôle de puissance de signaux descendants dans un système de télécommunication cellulaire à accès multiple par répartition de code comprenant une pluralité de stations de base Bk servant respectivement des cellules Ck ainsi qu'une pluralité de stations mobiles Mi, chaque station mobile Mi étant servie par au moins une station de base Bf(i), chaque liaison descendante entre la station de base Bf(i) et une station mobile Mi étant perturbée par un bruit Iext_down,i comprenant une interférence extra-cellulaire générée par les signaux descendants de stations de base Bk, k≠f(i) et une interférence intra-cellulaire générée par les signaux descendants de la station de base Bf(i) à destination de stations mobiles Mj, j≠i,
ladite méthode étant **caractérisée par** la succession des étapes suivantes :

(a) pour chaque station de base Bk, initialisation du niveau PtBk de puissance totale émise par la station de base Bk, à une valeur prédéterminée;
(b) pour chaque station mobile Mi, initialisation du niveau de bruit reçu Iext_down,i en fonction des niveaux de puissance totale PtBk ;
(c) pour chaque station mobile Mi, calcul du niveau de puissance PtBf(i),i du signal descendant que doit émettre la station de base Bf(i) à destination de la station mobile Mi pour permettre à la liaison descendante entre ladite station de base et ladite station mobile de garantir un rapport signal/ bruit SNRi prédéterminé, étant donné les niveaux courants de puissance totale PtBk;
(d) pour chaque station mobile Mi, évaluation du niveau Iext_down,i de bruit reçu en fonction des niveaux courants de puissance PtBf(k),k, k≠i;
les étapes (c) et (d) étant itérées tant que l'écart entre deux niveaux consécutifs de bruit reçu par un quelconque mobile Mi excède une valeur de marge prédéterminée.

10. Méthode de contrôle de puissance selon la revendication 9, **caractérisée en ce que en ce qu'**à l'étape (c) le calcul du niveau de puissance PtBf(i),i du signal descendant que doit émettre la station de base Bf(i) à destination de la station mobile Mi n'est pas effectué si l'écart entre le niveau courant et le niveau précédent du bruit reçu par la station mobile Mi est inférieur à ladite valeur de marge.

11. Méthode de contrôle de puissance selon la revendication 10, **caractérisée en ce qu'**à l'étape (c) les niveaux de puissance PtBk sont limités à une valeur minimale et à une valeur maximale.

12. Méthode de contrôle de puissance selon la revendication 10, **caractérisée en ce qu'**à l'étape (c) les niveaux de puissance PtBk,i sont limités à une valeur minimale et à une valeur maximale.

13. Méthode de contrôle de puissance selon l'une des revendication 9 à 12, **caractérisée en ce qu'**à l'étape (d) le niveau Iext_down,i de bruit reçu n'est pas rafraîchi à la valeur nouvellement évaluée si l'écart entre la valeur nouvellement évaluée et la valeur précédente est inférieure à ladite valeur de marge.

14. Méthode de contrôle de puissance selon l'une des revendications 9 à 13, **caractérisée en ce que** qu'à l'étape (a), la différence entre deux valeurs consécutives d'interférence extra-cellulaire est initialisée au double de ladite valeur de marge.

15. Méthode de contrôle de puissance selon l'une des revendications 9 à 14, **caractérisée en ce que** le calcul du niveau de puissance PtBf(i),i de l'étape (c) est effectué selon la formule suivante:

$$PtB_{f(i),i} = \frac{\left((\alpha-1)PtB_{f(i)} + \dfrac{No + \sum\limits_k PtB_k * G_{i,k}}{G_{i,f(i)}}\right)SNR_i}{\left(1 + \alpha SNR_i\right)}$$

où $\alpha$ est un facteur d'orthogonalité des signaux émis par une même base
et $G_{i,k}$ est le facteur d'atténuation de la liaison entre le mobile Mi et la base Bk
$No$ est le niveau de puissance du bruit de fond
$PtB_k$ est la puissance totale émise par la base k

et **en ce que** le calcul du niveau de bruit Iext_down,i de l'étape (d) est effectué selon la formule suivante :

$$Iext\_down,i = N_0 + \sum_k PtB_k \cdot G_{i,k} + \left((\alpha-1)PtB_{f(i)} + \alpha PtB_{f(i),i}\right)G_{i,f(i)}$$

15

avec

$$PtB_k = PtcB_k + \sum_{i, f(i)=k} PtB_{f(i),i}$$

où $PtcB_k$ est la puissance transmise par la station de base Bk sur le canal commun

16. Méthode de contrôle de puissance selon la revendication 15, **caractérisée en ce que** dans le calcul de lext_down, i seuls les termes correspondant aux stations de base les plus interférentes sont pris en compte.

17. Méthode de contrôle de puissance selon une des revendications précédentes, **caractérisée en ce que** la boucle d'itération des étapes (c) et (d) est elle-même itérée lorsqu'une caractéristique d'une liaison descendante entre une station mobile de base Bf(i) servant une station mobile Mi est modifiée ou lorsqu'un mobile change de station servante.

18. Méthode de contrôle de puissance selon la revendication 10, **caractérisée en ce que** si une station mobile Mi est servie par un sous-ensemble SBi de stations de base Bf(i,l) les signaux reçus de ces dites stations de base sont recombinés dans un récepteur RAKE et qu'à l'étape (c) les puissances d'émission PtBf(i,l),i des signaux descendants émis par les stations de base Bf(i,l) à destination de la station mobile Mi sont choisies égales avec

$$PtB_{f(i,l),i} = Pi = \frac{SNR_i}{\sum_{l \in SB_i} \dfrac{G_{i,f(i,l)}}{Ptotal(i) - (1-\alpha)G_{i,f(i,l)}PtB_{f(i,l)}}}$$

où $PtB_{f(i,l)}$ est la puissance totale émise par la station Bf(i,1)

et $Ptotal(i) = N_0 + \sum_k PtB_k * G_{i,k}$ est la puissance totale reçue par le mobile Mi

$N_0$ est le niveau de puissance du bruit de fond
$G_{i,k}$ est le facteur d'atténuation de la liaison de la station de base Bk vers le mobile Mi
$\alpha$ est un facteur d'orthogonalité des signaux émis par une même base

19. Méthode de contrôle de niveau de signaux d'émission dans un système de télécommunication comprenant une pluralité d'émetteurs Ei et une pluralité de récepteurs Rj, chaque récepteur Rj pouvant recevoir des signaux émis par un sous-ensemble Sj d'émetteurs et chaque canal de transmission Lij entre un émetteur Ei et un récepteur Rj pouvant être perturbé par une transmission sur un canal quelconque Lkl avec (k,l)≠(i,j), la perturbation étant proportionnelle à la puissance Ekl transmise sur ce canal, le niveau de signal Rij reçu par le récepteur Rj en provenance de l'émetteur Ei pouvant alors s'exprimer par :

$$R_{ij} = G_{ij}E_{ij} + \sum_{k,l \neq i,j} G_{kl}^{ij} E_{kl} + N_0$$

soit encore

$$R_{ij} = G_{ij}E_{ij} + Ext_{i,j} + N_0$$

où $G_{ij}$ est l'atténuation sur le canal L$_{ij}$ et

$G_{kl}^{ij}$ est le coefficient de couplage entre le canal L$_{kl}$ et le canal L$_{ij}$
$N_0$ est le bruit de fond
$Ext_{i,j}$ est l'interférence sur le canal L$_{ij}$

la méthode étant **caractérisée par** les étapes suivantes :

(a) initialisation des valeurs Exti,j à une valeur prédéterminée
(b) calcul des valeurs Eij permettant de garantir un rapport signal/bruit SNRij donné sur le canal Lij étant donné les niveaux d'interférence Exti,j ;
(c) évaluation des niveaux d'interférence Exti,j sur les canaux Lij en fonction des niveaux de puissance d'émission Ekl ;

les étapes (b) et (c) étant itérées tant que pour un canal quelconque Lij l'écart entre deux niveaux d'interférence consécutifs Exti,j est supérieur à une valeur de seuil.

20. Méthode de contrôle de niveau de signaux d'émission dans un système de télécommunication comprenant une pluralité d'émetteurs Ei et une pluralité de récepteurs Rj, chaque récepteur Rj pouvant recevoir des signaux émis par un sous-ensemble Sj d'émetteurs et chaque canal de transmission Lij entre un émetteur Ei et un récepteur Rj pouvant être perturbé par une transmission sur un canal quelconque Lkl avec (k,l)≠(i,j), la perturbation étant proportionnelle à la puissance Ekl transmise sur ce canal, le niveau de signal Eij reçu par le récepteur Rj en provenance de l'émetteur Ei pouvant alors s'exprimer par

$$R_{ij} = G_{ij} E_{ij} + \sum_{\substack{k \in S_j \\ (k,l) \neq (i,j)}} G_{kl}^{ij} E_{kl} + \sum_{k \in S_j} G_{kl}^{ij} E_{kl} + N_0$$

soit encore

$$R_{ij} = \left[ G_{ij} E_{ij} + \sum_{\substack{k \in S_j \\ (k,l) \neq (i,j)}} G_{kl}^{ij} E_{kl} + N_0 \right] + Extra_{i,j}$$

où $G_{ij}$ est l'attenuation sur le canal L$_{ij}$

et $G_{kl}^{ij}$ est le coefficient de couplage entre le canal L$_{kl}$ et le canal L$_{ij}$
$N_0$ est le niveau de puissance du bruit de fond
$Extra_{,j}$ est l'interférence sur le canal L$_{ij}$ due aux émetteurshors de $S_J$

la méthode étant **caractérisée par** les étapes suivantes :

(a) initialisation des valeurs Extraij à une valeur prédéterminée
(b) calcul des valeurs Eij permettant de garantir un rapport signal/bruit SNRij donné sur le canal Lij étant donné les niveaux d'interférence Extraij ;
(c) évaluation des niveaux d'interférence Extrai,j sur les canaux Lij en fonction des niveaux de puissance d'émission Ekl ;

les étapes (b) et (c) étant itérées tant que pour un canal quelconque Lij l'écart entre deux niveaux d'interférence consécutifs Extrai,j est supérieur à un seuil prédéterminé.

## Claims

1. Method of controlling the power of uplink signals in a code division multiple access cellular telecommunication system comprising a plurality of base stations Bk respectively serving cells Ck and a plurality of mobile stations Mi, each mobile station Mi being served by at least one base station Bf(i), each uplink connection between a mobile station Mi and the base station Bf(i) being disturbed by a noise comprising extracellular interference generated by the uplink signals of mobile stations situated outside the cell Cf(i) and intracellular interference generated by the uplink signals of mobile stations Mj, j≠i situated inside the cell Cf(i), said method being **characterised by** the following steps:

(a) for each base station Bk, initialisation of the extracellular interference level Iext_up,k to a predetermined value;

(b) for each mobile station Mi, calculation of the power level PtMi of the uplink signal allowing the uplink connection between said mobile station and the serving base station Bf(i) to guarantee a predetermined signal/noise ratio SNRi, given the current extracellular interference level Iext_up, f(i) of the cell Cf(i);

(c) for each base station Bk, evaluation of the extracellular interference level Iext_up,k of the cell Ck as a function of the current power levels PtMi of the uplink signals transmitted by mobile stations situated outside the cell Ck;

the steps (b) and (c) being iterated as long as the difference between two consecutive extracellular interference levels of any cell Ck exceeds a predetermined margin value.

2. Power control method according to claim 1, **characterised in that**, at the step (b), the calculation of the power level PtMi of the mobile stations Mi served by a base station Cf(i) is not performed if the difference between the current level and the previous level of extracellular interference Iext_up.f(i) of the cell Cf(i) is less than said margin value.

3. Power control method according to claim 2, **characterised in that**, at the step (b), the power levels PtMi are limited to a maximum value and a minimum value.

4. Power control method according to claim 2 or 3, **characterised in that**, at the step (c), the current extracellular interference level of a cell Ck is not refreshed to the newly evaluated value if the difference between the newly evaluated value and the previous value is less than said margin value.

5. Power control method according to one of claims 2 to 4, **characterised in that**, at the step (a), the difference between two consecutive extracellular interference values is initialised at double said margin value.

6. Power control method according to one of the preceding claims, **characterised in that** the calculation of the power level PtMi of the step (b) is performed according to the following formula:

$$PtMi = \frac{1}{G_{i,f(i)}} \frac{SNR_i \cdot D_{factor}}{1 + (1-\eta)SNR_i}$$

where

$$D_{factor} = \frac{N_0 + Iext\_up, f(i)}{1 - \sum_j 1/dj} \qquad \text{with } dj = 1 + \frac{1}{(1-\eta)SNR_i}$$

$\eta$ being the intracellular interference reduction factor

$G_{i,f(t)}$ being the attenuation factor of the uplink connection from Mi to B$_{f(i)}$

$N_0$ being the power level of the background noise

and **in that** the evaluation of the extracellular interference level Iext_up,k of the step (c) is performed according to the formula:

$$Iext\_up, k = \sum_{\forall i, f(i) \neq k} PtM_i * G_{i,k}$$

where $G_{i,k}$ is the attenuation factor of the transmission from the mobile Mi to the base station Bk.

7. Power control method according to claim 6, **characterised in that**, in the calculation of Iext_up,k, only the terms corresponding to the most interfering mobile stations are taken into account.

8. Power control method according to one of the preceding claims, **characterised in that** the iteration loop of the steps (b) and (c) is itself iterated when a characteristic of an uplink connection between a mobile station Mi and its serving base station Bf(i) is modified or when a mobile changes serving station.

9. Method of controlling the power of downlink signals in a code division multiple access cellular telecommunication system comprising a plurality of base stations Bk respectively serving cells Ck and a plurality of mobile stations Mi, each mobile station Mi being served by at least one base station Bf(i), each downlink connection between the base station Bf(i) and a mobile station Mi being disturbed by a noise Iext_down,i comprising extracellular interference generated by the downlink signals of base stations Bk, k≠f(i), and intracellular interference generated by the downlink signals of the base station Bf(i) to mobile stations Mj, j≠i, said method being **characterised by** the series of following steps:

> (a) for each base station Bk, initialisation of the total power level PtBk transmitted by the base station Bk, to a predetermined value;
> (b) for each mobile station Mi, initialisation of the noise level received Iext_down,i as a function of the total power levels PtBk;
> (c) for each mobile station Mi, calculation of the power level PtBf(i),i of the downlink signal which the base station Bf(i) must transmit to the mobile station M1 to allow the downlink connection between said base station and said mobile station to guarantee a predetermined signal/noise ratio SNRi, given the current total power levels PtBk;
> (d) for each mobile station Mi, evaluation of the noise level Iext_down,i received as a function of the current powder levels PtBf(k),k, k≠i;

> the steps (c) and (d) being iterated as long as the difference between two consecutive noise levels received by any mobile Mi exceeds a predetermined margin value.

10. Power control method according to claim 9, **characterised in that**, at the step (c), the calculation of the power level PtBf(i) of the downlink signal which the base station Bf(i) must transmit to the mobile station Mi is not performed if the difference between the current level and the previous level of the noise received by the mobile station Mi is less than said margin value.

11. Power control method according to claim 10, **characterised in that**, at the step (c), the power levels PtBk are limited to a minimum value and a maximum value.

12. Power control method according to claim 10, **characterised in that**, at the step (c), the power levels PtBk,i are limited to a minimum value and a maximum value.

13. Power control method according to one of claims 9 to 12, **characterised in that**, at the step (d), the noise level Iext_down,i received is not refreshed to the newly evaluated value if the difference between the newly evaluated value and the previous value is less than said margin value.

14. Power control method according to one of claims 9 to 13, **characterised in that**, at the step (a), the difference between two consecutive extracellular interference values is initialised at double said margin value

15. Power control method according to one of claims 9 to 14, **characterised in that** the calculation of the power level PtBf(i),i of the step (c) is performed according to the Following formula:

$$PtB_{f(i),i} = \frac{\left( (\alpha - 1)PtB_{f(i)} + \dfrac{No + \sum_{k} PtB_k * G_{i,k}}{G_{i,f(i)}} \right) SNR_i}{(1 + \alpha SNR_i)}$$

where $\alpha$ is an orthogonality factor of the signals transmitted by one and the same base
and $G_{i,k}$ is the attenuation factor of the connection between the mobile Mi and the base Bk

*No* is the power level of the background noise

$PtB_k$ is the total power transmitted by the base k

and **in that** the calculation of the noise level Iext_down,i of the step (d) is performed according to the following formula:

$$Iext\_down,i = N_0 + \sum_k PtB_k \cdot G_{i,k} + ((\alpha - 1)PtB_{f(i)} + \alpha PtB_{f(i),i})G_{i,f(i)}$$

with

$$PtB_k = PtcB_k + \sum_{i,f(i)=k} PtB_{f(i),i}$$

where $PtcB_k$ is the power transmitted by the base station Bk on the common channel.

16. Power control method according to claim 15, **characterised in that**, in the calculation of Iext_down,i, only the terms corresponding to the most interfering base stations are taken into account.

17. Power control method according to one of the preceding claims, **characterised in that** the iteration loop of the steps (c) and (d) is itself iterated when a characteristic of a downlink connection between a mobile station of base Bf(i) serving a mobile station Mi is modified or when a mobile changes serving station.

18. Power control method according to claim 10, **characterised in that**, if a mobile station Mi is served by a sub-assembly SBi of base stations Bf(i,l), the signals received from these said base stations are recombined in a RAKE receiver, and **in that**, at the step (c), the transmission powers PtBf(i,l),i of the downlink signals transmitted by the base stations Bf(i,l) to the mobile station Mi are selected equal to

$$PtB_{f(i,l),i} = Pi = \frac{SNR_i}{\sum_{l \in SB_i} \dfrac{G_{i,f(i,l)}}{Ptotal(i) - (1-\alpha)G_{i,f(i,l)}PtB_{f(i,l)}}}$$

where $PtB_{f(i,l)}$ is the total power transmitted by the station Bf(i,l)

and $Ptotal(i) = N_0 + \sum_k PtB_k * G_{i,k}$ is the total power received by the mobile Mi $N_0$ is the power level of the background noise

$G_{i,k}$ is the attenuation factor of the link from the base station Bk to the mobile Mi

$\alpha$ is an orthogonality factor of the signals transmitted by one and the same base.

19. Method of controlling the level of transmission signals in a telecommunication system comprising a plurality of transmitters Ei and a plurality of receivers Rj, each receiver Rj being capable of receiving signals transmitted by a sub-assembly Sj of transmitters and each transmission channel Lij between a transmitter Ei and a receiver Rj being capable of being disturbed by a transmission on any channel Lkl with (k,l)≠(i,j), the disturbance being proportional to the power Ekl transmitted on this channel, the signal level Rij received by the receiver Rj from the transmitter Ei then being able to be expressed by:

$$R_{i,j} = G_{i,j}E_{ij} + \sum_{k,l \neq i,j} G_{kl}^{ij} E_{kl} + N_0 \qquad \text{or again } R_{i,j} = G_{i,j}E_{ij} + Ext_{i,j} + N_0$$

where $G_{i,j}$ is the attenuation on the channel L$_{ij}$ and $G_{kl}^{ij}$ is the coefficient of coupling between the channel L$_{kl}$

and the channel L$_{ij}$
$N_0$ is the background noise
$Ext_{i,j}$ is the interference on the channel L$_{ij}$

the method being **characterised by** the following steps:

(a) initialisation of the values Exti,j to a predetermined value;
(b) calculation of the values Eij making it possible to guarantee a given signal/noise ratio SNRij on the channel Lij given the interference levels Exti,j;
(c) evaluation of the interference levels Exti,j on the channels Lij as a function of the transmission power levels Ekl;

the steps (b) and (c) being iterated as long as, for any channel Lij, the difference between two consecutive interference levels Exti,j is greater than a threshold value.

20. Method of controlling the level of transmission signals in a telecommunication system comprising a plurality of transmitters Ei and a plurality of receivers Rj, each receiver Rj being capable of receiving signals transmitted by a sub-assembly Sj of transmitters and each transmission channel Lij between a transmitter Ei and a receiver Rj being capable of being disturbed by a transmission on any channel Lkl with (k,l)≠(i,j), the disturbance being proportional to the power Ekl transmitted on this channel, the signal level Eij received by the receiver Rj from the transmitter Ei then being able to be expressed by

$$R_{i,j} = G_{i,j}E_{ij} + \sum_{\substack{l \in S_j \\ (k,l) \neq (i,j)}} G_{kl}^{ij} E_{kl} + \sum_{k \in S_j} G_{kl}^{ij} E_{kl} + N_0 \qquad \text{or again } R_{i,j} = \left[ G_{ij}E_{ij} + \sum_{\substack{k \in S_j \\ (k,l) \neq (i,l)}} G_{kl}^{ij} E_{kl} + N_0 \right] + Extra_{i,j}$$

where $G_{i,j}$ is the attenuation on the channel L$_{ij}$

and $G_{kl}^{ij}$ is the coefficient of coupling between the channel L$_{kl}$ and the channel L$_{ij}$
$N_0$ is the power level of the background noise
$Extra_{i,j}$ is the interference on the channel L$_{ij}$ due to the transmitters outside $S_j$

the method being **characterised by** the following steps:

(a) initialisation of the values Extrai,j to a predetermined value;
(b) calculation of the values Eij making it possible to guarantee a given signal/noise ratio SNRij on the channel Lij given the interference levels Extrai,j;
(c) evaluation of the interference levels Extrai,j on the channels Lij as a function of the transmission power levels Ekl;

the steps (b) and (c) being iterated as long as, for any channel Lij, the difference between two consecutive interference levels Extrai,j is greater than a predetermined threshold.

**Patentansprüche**

1. Verfahren zum Steuern der Leistung von Aufwärtsstreckensignalen in einem Zellulartelekommunikationssystem mit Vielfachzugriff durch Codemultiplex, das eine Vielzahl von Basisstationen Bk aufweist, die jeweils Zellen Ck versorgen, sowie eine Vielzahl von mobilen Stationen Mi, wobei jede mobile Station Mi von mindestens einer Basisstation Bf(i) versorgt wird, wobei jede Aufwärtsstrecke zwischen einer mobilen Station Mi und der Basisstation Bf(i) durch Rauschen gestört ist, das eine extrazellulare Interferenz aufweist, die von den Aufwärtsstreckensignalen der mobilen Stationen, die sich außerhalb der Zelle Cf(i) befinden, erzeugt wird, und eine intrazellulare Interferenz, die von den Aufwärtsstreckensignalen von mobilen Stationen Mj, j≠i, die sich innerhalb der der Zelle Cf(i) befinden, erzeugt wird,

- wobei das Verfahren durch die folgenden Schritte **gekennzeichnet** ist:

(a) für jede Basisstation Bk Initialisieren eines extrazellularen Interferenzpegels Iext_up,k auf einen vorbestimmten Wert;

(b) für jede mobile Station Mi Berechnen des Leistungspegels PtMi des Aufwärtsstreckensignals, um zuzulassen, dass für die Aufwärtsstrecke zwischen der mobilen Station und der versorgenden Basisstation Bf(i) angesichts des gegenwärtigen extrazellularen Interferenzpegels lext_up,f(i) der Zelle Cf(i) ein vorbestimmtes Signal/Rausch-Verhältnis SNRi garantiert wird;

(c) für jede Basisstation Bk Bewerten des extrazellulären Interferenzpegels lext_up,k der Zelle Ck in Abhängigkeit von den gegenwärtigen Leistungspegeln PtMi der Aufwärtsstreckensignale, die von den mobilen Stationen, die sich außerhalb der Zelle Ck befinden, gesendet werden;

wobei die Schritte (b) und (c) so lange wiederholt werden, bis der Unterschied zwischen zwei aufeinander folgenden extrazellularen Interferenzpegeln einer beliebigen Zelle Ck einen vorbestimmten Toleranzbereichswert überschreitet.

2. Verfahren zum Steuern der Leistung nach Anspruch 1, **dadurch gekennzeichnet, dass** im Schritt (b) das Berechnen des Leistungspegels PtMi der mobilen Stationen Mi, die von einer Basisstation Cf(i) versorgt werden, nicht durchgeführt wird, wenn der Unterschied zwischen dem gegenwärtigen Pegel und dem vorangehenden Pegel der extrazellularen Interferenz lext_up,f(i) der Zelle Cf(i) kleiner als der Toleranzbereichswert ist.

3. Verfahren zum Steuern der Leistung nach Anspruch 2, **dadurch gekennzeichnet, dass** im Schritt (b) die Leistungspegel PtMi auf einen Maximalwert und einen Minimalwert beschränkt sind.

4. Verfahren zum Steuern der Leistung nach Anspruch 2 oder 3, **dadurch gekennzeichnet, dass** im Schritt (c) der gegenwärtige Pegel der extrazellularen Interferenz einer Zelle Ck nicht auf den neu bewerteten Wert erneuert wird, wenn der Unterschied zwischen dem neu bewerteten Wert und dem vorangehenden Wert kleiner als der Toleranzbereichswert ist.

5. Verfahren zum Steuern der Leistung nach einem der Ansprüche 2 bis 4, **dadurch gekennzeichnet, dass** im Schritt (a) der Unterschied zwischen zwei aufeinander folgenden Werten der extrazellularen Interferenz auf das Doppelte des Toleranzbereichswerts initialisiert wird.

6. Verfahren zum Steuern der Leistung nach einem der vorhergehenden Ansprüche, **dadurch gekennzeichnet, dass** die Berechnung des Leistungspegels PtMi des Schritts (b) gemäß der folgenden Formel durchgeführt wird:

$$PtMi = \frac{1 SNR_i \bullet D_{Faktor}}{G_{i,f(i)} 1 + (1-\eta) SNR_i}$$

wobei

$$D_{Faktor} = \frac{N_{o+} Iext\_up, f(i)}{1 - \sum_j 1/dj} \text{ mit } dj = 1 + \frac{1}{(1-\eta) SNR_j}$$

wobei $\eta$ der Reduktionsfaktor der intrazellularen Interferenz ist,
$G_{i,f(i)}$ der Dämpfungsfaktor der Aufwärtsstrecke von $M_i$ zu $B_{f(i)}$ ist,
$N_o$ der Leistungspegel des Hintergrundrauschens ist,

und dass die Bewertung des extrazellularen Interferenzpegels lext_up,k des Schritts (c) gemäß der folgenden Formel ausgeführt wird:

$$Iext\_up, k = \sum_{\forall i, f(i) \neq k} PtMi * G_{i,k}$$

wobei $G_{i,k}$ der Dämpfungsfaktor der Übertragung der mobilen Station Mi zur Basisstation $B_k$ ist.

**7.** Verfahren zum Steuern der Leistung nach Anspruch 6, **dadurch gekennzeichnet, dass** bei der Berechnung von lext_up,k nur die Ausdrücke, die den am stärksten interferierenden mobilen Stationen entsprechen, berücksichtigt werden.

**8.** Verfahren zum Steuern der Leistung nach einem der vorhergehenden Ansprüche, **dadurch gekennzeichnet, dass** die Iterationsschleife der Schritte (b) und (c) selbst dann wiederholt wird, wenn eine Charakteristik einer Aufwärtsstrecke zwischen einer mobilen Station Mi und ihrer versorgenden Basisstation Bf(i) modifiziert wird oder wenn eine mobile Station die versorgende Station wechselt.

**9.** Verfahren zum Steuern der Leistung von Abwärtsstreckensignalen in einem Zellulartelekommunikationssystem mit Vielfachzugriff durch Codemultiplex, das eine Vielzahl von Basisstationen Bk aufweist, die jeweils Zellen Ck versorgen, sowie eine Vielzahl von mobilen Stationen Mi, wobei jede mobile Station Mi von mindestens einer Basisstation Bf(i) versorgt wird, wobei jede Abwärtsstrecke zwischen einer mobilen Station Mi und der Basisstation Bf(i) durch Rauschen lext_down,i gestört ist, das eine extrazellulare Interferenz aufweist, die von den Abwärtsstreckensignalen der Basisstationen Bk, k≠f(i), erzeugt wird, und eine intrazellulare Interferenz, die von den Abwärtsstreckensignalen von der Basisstation Bf(i) zu den mobilen Stationen Mj, j≠i, erzeugt wird,

- wobei das Verfahren durch die folgenden Schritte **gekennzeichnet** ist:

(a) für jede Basisstation Bk Initialisieren des Pegels PtBk der Gesamtleistung, die von der Basisstation Bk gesendet wird, auf einen vorbestimmten Wert;
(b) für jede mobile Station Mi Initialisieren des empfangenen Rauschpegels lext_down,i in Abhängigkeit vom Pegel PtBk der Gesamtleistung;
(c) für jede mobile Station Mi Berechnen des Leistungspegels PtBf(i),i des Abwärtsstreckensignals, das die Basisstation Bf(i) zur mobilen Station Mi senden muss, um zuzulassen, dass für die Abwärtsstrecke zwischen der Basisstation und der mobilen Station angesichts des gegenwärtigen Pegels PtBk der Gesamtleistung ein vorbestimmtes Signal/Rausch-Verhältnis SNRi garantiert wird;
(d) für jede mobile Station Mi Bewerten des empfangenen Rauschpegels lext_down,i in Abhängigkeit vom gegenwärtigen Leistungspegel PtBf(k),k, k≠i;

wobei die Schritte (c) und (d) so lange wiederholt werden, bis der Unterschied zwischen den zwei aufeinander folgenden Rauschpegeln, die eine beliebige mobile Station Mi empfängt, einen vorbestimmten Toleranzbereichswert überschreitet.

**10.** Verfahren zum Steuern der Leistung nach Anspruch 9, **dadurch gekennzeichnet, dass** im Schritt (c) das Berechnen des Leistungspegels PtBf(i),i des Abwärtsstreckensignals, das die Basisstation Bf(i) zur mobilen Station Mi senden muss, nicht durchgeführt wird, wenn der Unterschied zwischen dem gegenwärtigen Pegel und dem vorangehenden Pegel des von der mobilen Station Mi empfangenen Rauschens kleiner als der Toleranzbereichswert ist.

**11.** Verfahren zum Steuern der Leistung nach Anspruch 10, **dadurch gekennzeichnet, dass** im Schritt (c) die Leistungspegel PtBk auf einen Minimalwert und auf einen Maximalwert beschränkt sind.

**12.** Verfahren zum Steuern der Leistung nach Anspruch 10, **dadurch gekennzeichnet, dass** im Schritt (c) die Leistungspegel PtBk,i auf einen Minimalwert und auf einen Maximalwert beschränkt sind.

**13.** Verfahren zum Steuern der Leistung nach einem der Ansprüche 9 bis 12, **dadurch gekennzeichnet, dass** im Schritt (d) der Pegel lext_down,i des empfangenen Rauschens nicht auf den neu bewerteten Wert erneuert wird, wenn der Unterschied zwischen dem neu bewerten Wert und dem vorangehenden Wert kleiner als der Toleranzbereichswert ist.

**14.** Verfahren zum Steuern der Leistung nach einem der Ansprüche 9 bis 13, **dadurch gekennzeichnet, dass** im Schritt (a) der Unterschied zwischen zwei aufeinander folgenden Werten der extrazellularen Interferenz auf das Doppelte des Toleranzbereichswerts initialisiert wird.

**15.** Verfahren zum Steuern der Leistung nach einem der Ansprüche 9 bis 14, **dadurch gekennzeichnet, dass** das Berechnen des Leistungspegels PtBf(i),i des Schritts (c) gemäß der folgenden Formel durchgeführt wird:

$$PtB_{f(i),i} = \frac{\left(\left(\alpha - 1\right)PtB_{f(i)} + \dfrac{No + \sum\limits_{k} PtB_{k} * G_{i,k}}{G_{i,f(i)}}\right)SNR_i}{\left(1 + \alpha SNR_i\right)}$$

wobei $\alpha$ ein Orthogonalitätsfaktor des von einer gleichen Basisstation gesendeten Signals ist,
$G_{i,k}$ der Dämpfungsfaktor der Strecke zwischen der mobilen Station Mi und der Basisstation Bk ist,
$No$ der Leistungspegel des Hintergrundrauschens ist, und
$PtB_k$ die von der Basisstation k gesendete Gesamtleistung ist,

und dass das Berechnen des Rauschpegels lext_down,i des Schritts (d) gemäß der folgenden Formel ausgeführt wird:

$$lext\_down, i = No + \sum\limits_{k} PtB_k * G_{i,k} + \left(\left(\alpha - 1\right)PtB_{f(i)} + \alpha PtB_{f(i),i}\right)G_{i,f(i)}$$

mit

$$PtB_k = PtcB_k \sum\limits_{i, f(i)=k} PtB_{f(i),i}$$

wobei $PtcB_k$ die von der Basisstation Bk auf dem gemeinsamen Kanal übertragene Leistung ist.

**16.** Verfahren zum Steuern der Leistung nach 15, **dadurch gekennzeichnet, dass** beim Berechnen von lext_down,i nur die Ausdrücke, die den am stärksten interferierenden Basisstationen entsprechen, berücksichtigt werden.

**17.** Verfahren zum Steuern der Leistung nach einem der vorhergehenden Ansprüche, **dadurch gekennzeichnet, dass** die Iterationsschleife der Schritte (c) und (d) selbst dann wiederholt wird, wenn eine Charakteristik einer Abwärtsstrecke zwischen einer mobilen Station und der Basisstation Bf(i), die eine mobile Station Mi versorgt, modifiziert wird oder wenn eine mobile Station die versorgende Basisstation wechselt.

**18.** Verfahren zum Steuern der Leistung nach Anspruch 10, **dadurch gekennzeichnet, dass** dann, wenn eine mobile Station Mi von einer Untereinheit Sbi von Basisstationen Bf(i,l) versorgt wird, die von diesen Basisstationen empfangenen Signale in einem RAKE-Empfänger rekombiniert werden und im Schritt (c) die von den Basisstationen Bf (i,l) zur mobilen Station Mi gesendeten Sendeleistungen PtBf(i,l),i der Abwärtsstreckensignale gleich ausgewählt werden mit

$$PtB_{f(i,l),i} = Pi = \frac{SNR_i}{\sum\limits_{l \in Sbi} \dfrac{G_{i,f(i,l)}}{Ptotal(i) - (1 - \alpha)G_{i,f(i,l)}PtB_{f(i,l)}}}$$

wobei $PtB_{f(i,l)}$ die von der Basisstation Bf(i,l) gesendete Gesamtleistung ist,

$$Ptotal(i) = No + \sum\limits_{k} PtB_k * G_{i,k}$$

die von der mobilen Station Mi empfangene Gesamtleistung ist,

*No* der Leistungspegel des Hintergrundrauschens ist,

$G_{i,k}$ der Dämpfungsfaktor der Strecke der Basisstation Bk zur mobilen Station Mi ist, und

$\alpha$ ein Orthogonalitätsfaktor der von einer gleichen Basisstation gesendeten Signale ist.

**19.** Verfahren zum Steuern des Leistungspegels von Sendesignalen in einem Telekommunikationssystem, das eine Vielzahl von Sendern Ei und eine Vielzahl von Empfängern Rj aufweist, wobei jeder Empfänger Rj Signale empfangen kann, die von einer Untereinheit Sj von Sendern gesendet werden, und jeder Übertragungskanal Lij zwischen einem Sender Ei und einem Empfänger Rj bei einer Übertragung auf einem beliebigen Kanal Lkl mit (k,l)≠(i,j) gestört werden kann, wobei die Störung zu der Leistung Ekl, die auf diesem Kanal gesendet wird, proportional ist, wobei der vom Empfänger Rj vom Sender Ei empfangene Signalpegel Rij wie folgt ausgedrückt werden kann:

$$R_{ij} = G_{ij}E_{ij} + \sum_{k,l \neq i,j} G_{kl}^{ij}E_{kl} + N_o \quad \text{oder auch} \quad R_{ij} = G_{ij}E_{ij} + Ext_{i,j} + N_o$$

wobei $G_{i,j}$ die Dämpfung auf dem Kanal $L_{ij}$ ist,

$G_{kl}^{ij}$ der Kopplungskoeffizient zwischen dem Kanal $L_{kl}$ und dem Kanal $L_{ij}$ ist,

$N_o$ das Hintergrundrauschen ist, und

$Ext_{i,j}$ die Interferenz auf dem Kanal Lij ist,

wobei das Verfahren durch die folgenden Schritte **gekennzeichnet** ist:

(a) Initialisieren der Werte Exti,j auf einen vorbestimmten Wert,
(b) Berechnen der Werte Eij, um zuzulassen, dass angesichts der Interferenzpegels Exti,j ein gegebenes Signal/Rausch-Verhältnis SNRij auf dem Kanal Lij garantiert wird,
(c) Bewerten der Interferenzpegels Exti,j auf den Kanälen Lij in Abhängigkeit von den Sendeleistungspegeln Ekl,

wobei die Schritte (b) und (c) so lange wiederholt werden, bis für einen beliebigen Kanal Lij der Unterschied zwischen zwei aufeinander folgenden Interferenzpegeln Exti,j größer als ein Schwellenwert ist.

**20.** Verfahren zum Steuern des Leistungspegels von Sendesignalen in einem Telekommunikationssystem, das eine Vielzahl von Sendern Ei und eine Vielzahl von Empfängern Rj aufweist, wobei jeder Empfänger Rj Signale empfangen kann, die von einer Untereinheit Sj von Sendern gesendet werden, und jeder Übertragungskanal Lij zwischen einem Sender Ei und einem Empfänger Rj bei einer Übertragung auf einem beliebigen Kanal Lkl mit (k,l)≠(i,j) gestört werden kann, wobei die Störung zu der Leistung Ekl, die auf diesem Kanal gesendet wird, proportional ist, wobei der vom Empfänger Rj vom Sender Ei empfangene Signalpegel Eij wie folgt ausgedrückt werden kann:

$$R_{ij} = G_{ij}E_{ij} + \sum_{\substack{k \in S_j \\ (k,l) \neq (i,j)}} G_{kl}^{ij}E_{kl} + \sum_{k \in S_j} G_{kl}^{ij}E_{kl} + N_o$$

oder auch

$$R_{ij} = \left( G_{ij}E_{ij} + \sum_{\substack{k \in S_j \\ (k,l) \neq (i,j)}} G_{kl}^{ij}E_{kl} + N_o \right) + Extra_{i,j}$$

wobei $G_{ij}$ die Dämpfung auf dem Kanal $L_{kj}$ ist,

$G_{kl}^{ij}$ der Kopplungskoeffizient zwischen dem Kanal $L_{kl}$ und dem Kanal $L_{ij}$ ist,

$N_o$ der Pegel des Hintergrundrauschens ist, und

$Extra_{ij}$ die Interferenz auf dem Kanal $L_{ij}$ ist, die auf die Sender außerhalb von $S_j$ zurückzuführen ist,

wobei das Verfahren durch die folgenden Schritte **gekennzeichnet** ist:

(a) Initialisieren der Werte Extrai,j auf einen vorbestimmten Wert,
(b) Berechnen der Werte Eij, um zuzulassen, dass angesichts der Interferenzpegels Extrai,j ein gegebenes Signal/Rausch-Verhältnis SNRij auf dem Kanal Lij garantiert wird,
(c) Bewerten der Interferenzpegels Extrai,j auf den Kanälen Lij in Abhängigkeit von den Sendeleistungspegeln Ekl,

wobei die Schritte (b) und (c) so lange wiederholt werden, bis für einen beliebigen Kanal Lij der Unterschied zwischen zwei aufeinander folgenden Interferenzpegeln Extrai,j größer als ein Schwellenwert ist.

PtM₁

M₁

$G_{1,k}$

PtM₂

M₂

$G_{2,k}$

PtM₃

M₃

$G_{3,k}$

PtMᵢ

Mᵢ

$G_{i,k}$

BK

$k = f(1) = f(2) \cdots = f(i)$

## Fig. 1

$G_{1,k}$

M₁

$PtB_{k,1}$

$PtB_{k,2}$

$G_{2,k}$

M₂

$PtB_{k,3}$

$G_{3,k}$

M₃

$PtB_{k,i}$

$G_{i,k}$

Mᵢ

BK

$k = f(1) = f(2) \cdots = f(i)$

## Fig. 2

Fig. 3

FIG.4

Fig. 5

20

21

22

25

23

24

FIG.6